# EUROPÄISCHE PATENTSCHRIFT

(11) **EP 2 351 186 B1**
(45) Veröffentlichungstag und Bekanntmachung des Hinweises auf die Patenterteilung: **10.08.2016**
(21) Anmeldenummer: 09747806.9
(22) Anmeldetag: 19.10.2009
(51) Int. Cl.: B60R 16/03, H02J 1/10, H02J 7/14

(54) **REDUNDANTER PARALLELBETRIEB VON KFZ-BORDNETZ-GENERATOREN**
REDUNDANT PARALLEL OPERATION OF GENERATORS FOR A MOTOR VEHICLE SUPPLY SYSTEM
FONCTIONNEMENT PARALLELE ET REDONDANT DE GENERATEURS POUR LE RESEAU DE BORD D'UN VEHICULE AUTOMOBILE

(30) Priorität: 29.10.2008 DE 102008043251
(43) Veröffentlichungstag der Anmeldung: 03.08.2011
(73) Patentinhaber: Robert Bosch GmbH, 70442 Stuttgart (DE)
(72) Erfinder: PEUSER, Thomas, 71636 Ludwigsburg (DE)
(86) Internationale Anmeldenummer: PCT/EP2009/063662
(87) Internationale Veröffentlichungsnummer: WO 2010/049306

(56) Entgegenhaltungen:
- DE-A1-102006 052 525
- US-A1- 2006 122 737

## Beschreibung

### Stand der Technik

Die Erfindung geht aus von Steuerungsmechanismen für eine Gruppe von Generatoren, die ein Kfz-Bordnetz versorgen. Die meisten bekannten Strategien zum symmetrischen Parallelbetrieb für Generatoren basieren auf einer Zentralsteuerungsstruktur mit einem einzelnen regelnden Mastergenerator oder mit einer Zentralsteuerung und mehreren Slave-Generatoren, die in direkter Weise von dieser zentralen Einrichtung gesteuert werden. Hierbei bestimmt der Mastergenerator oder die Zentralsteuerung nach einer definierten Strategie die notwendige Auslastung des Mastergenerators und gibt an die Slave-Generatoren ein steuerndes Signal ab. Die Slave-Generatoren erhalten somit ein Vorgabesignal, demgemäß diese betrieben werden, ohne dass eine zur Steuerung vorgesehene Rückkoppelung zum Master vorgesehen ist. Die gesamte Regelungsintelligenz ist somit in einer Zentraleinrichtung (in dem Mastergenerator) vorgesehen. Bei einer derartigen Systemarchitektur ist die Gesamtsystemübersicht im Master vorgesehen, der dementsprechend die Slave-Generatoren ansteuert. Die Ansteuerungsstrategie des Masters wird ebenso innerhalb des Masters vorgesehen, wobei die Slave-Generatoren gemäß der vom Master abgegebenen Vorgaben arbeiten.

Beispielsweise die Druckschrift DE 10 2007 037 355 A1 beschreibt eine derartige Systemarchitektur, bei der ein zentrales Steuergerät sämtliche Steueraufgaben und Überwachungsaufgaben übernimmt. Die untergeordneten Generatoren arbeiten nach einer Richtgröße, die von dem zentralen Steuergerät abgegeben wird.

Mit der zentralen Architektur ist jedoch inhärent der Nachteil verknüpft, dass sämtliche nachgeordneten Generatoren von dem Betrieb der Zentralsteuerung oder des Mastergenerators abhängen, so dass bei einer Störung der zentralen Übertragung oder bei Störung des zentralen Steuergeräts mangels Ansteuerung auch sämtliche nachgeordnete Generatoren ausfallen. Ferner ist bei einer hohen Anzahl von nachgeordneten Generatoren die Bearbeitung der jeweiligen Sendersignale durch die zentrale Steuerungseinrichtung aufwändig, so dass für die Zentralsteuerung besonders hohe Anforderungen hinsichtlich der Rechenleistung bestehen. Es ist daher eine Aufgabe der Erfindung, einen Ansteuerungsmechanismus für eine Gruppe von Generatoren vorzusehen, der diese Nachteile nicht aufweist, oder bei dem die Nachteile gemildert sind.

Das Dokument US 2006/122737 offenbart ein Verfahren zur Steuerung einer Gruppe von mindestens zwei elektrischen Generatoren, die ein Kfz-Bordnetz versorgen, wobei jeder einzelne Generator der Gruppe einen Generator-Auslastungswert, der die Auslastung des einzelnen Generator wiedergibt, einer Zentralsteuerung bereitstellt, wobei die Auslastungswerte einen Absolutwert darstellen, der eine Ist-Leistung wiedergibt, die von dem einzelnen Generator erbracht wird, oder einen relativen Wert darstellen, der ein Verhältnis der Ist-Leistung zu einer Nominalleistung des einzelnen Generators wiedergibt.

### Offenbarung der Erfindung

Die Erfindung ermöglicht ein redundantes System zur Steuerung einer Gruppe von Generatoren, bei denen ein Ausfall einer Komponente nicht zum Ausfall des Gesamtsystems führt. Der Betrieb jeder Komponente beeinträchtigt somit nicht unmittelbar den Betrieb der anderen Komponenten. Die Funktion des Gesamtsystems hängt nicht von der Funktion einer einzelnen Komponente ab. Mit der Erfindung wird ein redundantes System geschaffen, bei dem die Steueraufgaben verteilt sind und somit die korrekte Steuerung des Gesamtsystems nicht von einer einzelnen Komponente abhängt. Es besteht somit keine Störquelle, die den Betrieb des Gesamtsystems beeinträchtigen kann. Zudem kann die Erfindung mit Komponenten vorgesehen werden, die jeweils eine relativ geringe Rechenleistung aufweisen, wodurch sich die Kosten verringern. Ferner ermöglicht die Erfindung eine automatische Ausbalancierung der einzelnen Generatorleistungen einer Gruppe von Generatoren, ohne dass komplexe Berechnungen erforderlich sind. Die erfindungsgemäße Steuerung weist eine deutlich geringere Störungsanfälligkeit auf und ermöglicht eine Verlagerung der Steueraufgaben auf andere Komponenten, wenn eine Komponente ausfällt oder wenn mehrere Komponenten ausfallen.

Das der Erfindung zu Grunde liegende Konzept ist es, dass bei der Steuerung von mehreren, d. h. mindestens zwei elektrischen Generatoren, die dasselbe Kfz-Bordnetz versorgen, nicht eine zentrale Instanz die jeweilige Auslastung der Generatoren in einer hierarchisch übergeordneten Ebene ermittelt, sondern dass jeder Generator selbst den eigenen Auslastungswert ermittelt und ansteuert. Hierzu erhält jeder Generator von jedem der anderen Generatoren den individuellen Auslastungswert jedes einzelnen Generators, so dass jeder Generator der Gruppe, die ein gemeinsames Kfz-Bordnetz versorgen, entsprechende Mitteilungen an alle anderen Generatoren der Gruppe übermittelt. Dadurch ist es möglich, dass jeder einzelne der Gruppe von Generatoren die Summe der Leistungen der anderen Generatoren ermitteln kann und somit die eigene Auslastung bzw. die eigene Leistung in Bezug zu den Leistungen bzw. den Auslastungen der anderen Generatoren setzen kann. Insbesondere kann dadurch jeder einzelne der Generatoren seine eigene Auslastung derart vorsehen, dass seine Auslastung nicht wesentlich von der Auslastung der anderen Generatoren abweicht, wobei die Abweichung beispielsweise innerhalb eines vorgegebenen beispielsweise prozentualen Intervalls sein kann, beispielsweise ± 50 %, ± 30 %, ± 20 %, ± 10 % oder ± 5 % der relativen Auslastung der anderen Generatoren bzw. deren Mittel. Dadurch wird beispielsweise erreicht, dass keiner der Generatoren bei besonders hoher Auslastung gefahren wird, während die anderen Generatoren mit wesentlich niedrigeren Auslastungen beaufschlagt sind. Dieser dezentrale Mechanismus ermöglicht, dass alle Generatoren im Wesentlichen im gleichen Auslastungsbereich (anteilig gesehen) arbeiten, so dass kein einzelner Generator einem deutlich höheren Verschleiß ausgesetzt ist, der von der Auslastung abhängt, während andere Generatoren geringfügiger belastet werden. Darüber hinaus haben auf Grund der erfindungsgemäßen Steuerungsarchitektur alle Generatoren den Systemüberblick und können an Hand eigener Regelmechanismen selbst auf Ereignisse reagieren, beispielsweise auf einen Ausfall eines der Generatoren, indem jeder der noch arbeitenden Generatoren beispielsweise anteilig zu seinem Nennwert die Leistung des ausgefallenen Generators zusätzlich übernimmt. In Gegenüberstellung zu einer Zentralsteuerung nach dem Stand der Technik, bei deren Ausfall mangels Ansteuerung keiner der Generatoren arbeitet, ist ersichtlich, dass die erfindungsgemäße Steuerungsarchitektur eine N+m-Redundanz vorsieht, wobei m die Anzahl der Generatoren ist, die beim Ausfall eines oder mehrer Generatoren verbleibt. Mit anderen Worten wird durch die Verteilung der Steuerungsintelligenz auf alle Generatoren ein Höchstmaß an Redundanz geschaffen, so dass ein Ausfall einer Komponente nie zum Ausfall des Gesamtsystems führt, im Gegensatz zu zentral gesteuerten Architekturen, bei denen der Ausfall der Zentralsteuerung zum Gesamtausfall führt.

Vorzugsweise sind alle an ein Kfz-Bordnetz angeschlossenen Generatoren gemäß der Erfindung angeschlossen und erhalten Nachrichten oder Signale von jedem der anderen Generatoren, die an das Kfz-Bordnetz angeschlossen sind, und senden auch Nachrichten an alle Generatoren, die an das Kfz-Bordnetz angeschlossen sind. Die erfindungsgemäße Steuerung betrifft vorzugsweise daher eine Gruppe von elektrischen Generatoren, die alle Generatoren umfassen, die an das Kfz-Bordnetz angeschlossen sind. Gemäß einer Ausführung der Erfindung sind mindestens zwei elektrische Generatoren zur erfindungsgemäßen Steuerung gruppiert, wobei die Gruppe von mindestens zwei elektrischen Generatoren alle Generatoren umfasst, die an das Kfz-Bordnetz angeschlossen sind, oder mindestens zwei Generatoren umfasst, die an das Kfz-Bordnetz angeschlossen sind, wobei mindestens ein weiterer Generator nicht von der Gruppe umfasst ist. Die Generatoren der Gruppe kommunizieren im Allgemeinen über ein Netz, wobei das Netz Nachrichten über ein paketvermitteltes oder leitungsvermitteltes Kommunikationsprotokoll überträgt, wobei im Allgemeinen Daten über das Netz übertragen werden, die pro Generator der Gruppe einen Generator-Auslastungswert wiedergeben, der die Auslastung des einzelnen Generators kennzeichnet. Die Daten, welche die Generator-Auslastungswerte übertragen, werden vorzugsweise von einem Generator an einen weiteren Generator übertragen oder können auch an einen Speicher innerhalb des Netzes übertragen werden, der wiederum die Daten abrufbar für jeden der Generatoren der Gruppe bereithält. Die Auslastungswerte werden vorzugsweise in Form von digitalen Daten übertragen, insbesondere mittels einzelner digitaler bzw. binärer Datenpakete, die neben dem Generator-Auslastungswert auch eine Kennzeichnung oder Identifikation des Generators umfassen, dem der Generator-Auslastungswert zugeordnet ist. Ferner kann das Datenpaket eine Adresskennzeichnung umfassen, die den Empfänger des Datenpakets kennzeichnet, wobei jeder einzelne Generator der Gruppe an alle anderen Generatoren der Gruppe das Datenpaket dadurch übermittelt, dass dieser für jeden anderen Generator der Gruppe ein Datenpaket absendet, das eine Kennzeichnung eines der anderen Generatoren umfasst. Die Anzahl der übertragenen Datenpakete entspricht dann der Anzahl der anderen Generatoren, wobei jedes Datenpaket eine andere Generatorkennzeichnung aufweist, so dass jeder andere Generator ein Datenpaket erhält, das mit seiner Kennzeichnung, d.h. der Kennzeichnung des sendenden Generators, gekennzeichnet ist.

Die Auslastungswerte sind vorzugsweise digitale Werte und folglich durch Quantisierung gerundet und bilden vorzugsweise ein Bitwort mit einer festen Wortbreite, beispielsweise einer Wortbreite von 4 bit, 6 bit, 8 bit, 12 bit, 16 bit, 24 bit oder 32 bit. Die Übertragung kann gemäß einem standardisierten Datenübertragungsprotokoll vorgesehen werden, so dass die einzelnen Datenpakete der Standardisierung des Datenübertragungsprotokolls entsprechen. Datenübertragungsprotokolle sind vorzugsweise Datenübertragungsprotokolle für Kfz-Anwendungen, beispielsweise gemäß dem LIN-Standard oder gemäß dem CAN-Standard. Die Kommunikation richtet sich nicht notwendigerweise nach dem gesamten Protokollstack des jeweiligen Busses, sondern es können auch einzelne Schichten des Kommunikationsprotokolls aus dem Standard entnommen werden, und andere Schichten können verschieden zu dem Standard vorgesehen werden. Vorzugsweise läuft die Kommunikation zwischen den Generatoren gemäß der physikalischen Schicht, der Sicherungsschicht und/oder der Vermittlungsschicht des CAN-Busprotokolls oder des LAN-Busprotokolls ab. Ferner können die Daten zur gesicherten Kommunikation mit Redundanz versehen werden, beispielsweise mittels eines hinzugefügten zyklischen Redundanzchecks, CRC. Wird ein standardisiertes Protokoll verwendet, so kann das Hinzufügen der Redundanz gemäß dem Standard vorgesehen sein, oder es können die Nutzdaten selbst mit einem zusätzlichen CRC-Check versehen sein. Anstatt eines CRC-Checks oder in Kombination hiermit können die Generator-Auslastungswerte auch mit Redundanz versehen werden mittels Faltungscodes, Quersummenchecks und Ähnlichem. Im Falle eines erkannten Fehlers wird dieser entweder an Hand der Redundanzdaten korrigiert oder es wird von einer Fehler erkennenden Komponente (beispielsweise einem adressierten Generator) eine erneute Übertragung aufgefordert. Die Datenübertragung kann prinzipiell auch als pulswellenmodulierter Burst vorgesehen sein, wobei die Pulswellenmodulation den jeweiligen Generator-Auslastungswert wiedergibt und der Burst dazu dient, dass über das gleiche Netz mehrere Generatoren Daten übertragen können, ohne dass die Datenübertragungen sich überlappen.

Das Netz kann als serielles oder paralleles Netz ausgebildet sein, bei dem digitale Daten seriell oder parallel übertragen werden, wobei die Netztopologie einen linearen Bus, eine Busschleife (offen), einen Stern, einen Baum, einen ringförmigen Bus, ein vollvermaschtes Netz, ein teilvermaschtes Netz oder eine Kombination hiervon umfasst. Die einzelnen Generatoren können unmittelbar oder mittelbar miteinander verbunden sein. Bevorzugt wird ein linearer Bus verwendet, der Ende und Anfang aufweist, oder der in sich geschlossen ist und als Ring ausgebildet ist.

Die Steuerung der Kommunikation kann durch eine zentrale Kommunikationseinheit, beispielsweise einen Arbiter, vorgesehen sein, der eine Multiplexübertragung der einzelnen Generatoren dadurch vorsieht, dass er einzelne Zeitschlitze zuteilt. Ferner können dezentrale Zugriffsmechanismen vorgesehen sein, beispielsweise CSMA/CD, die eine Wiederholung der Übertragung vorsehen, wenn die Übertragung nicht vollständig ungestört (d. h. kollisionsfrei) durchgeführt wurde. Insbesondere kann ein Token-Busprotokoll verwendet werden demnach die einzelnen Generatoren in einer Reihenfolge angeordnet sind und ein Datenpaket gemäß dieser Reihenfolge von einem Generator zu dem folgenden Generator übertragen wird. Im Falle eines Tokenrings sendet nur derjenige Generator, der momentan das Token hält, welches eine Semaphore darstellt, die das Senderecht zuteilt. Als Initialisierung beginnt der erste Generator der Reihenfolge, woraufhin das von diesem abgesetzte Datenpaket das Senderecht demjenigen zuteilt, der das Paket zuletzt empfangen hat. Gemäß einem Beispiel beginnt bei der Kommunikation mittels Tokenring der erste Generator mit der Übertragung, wobei alle die Nachricht des ersten Generators empfangen. Dies stellt die Initialisierungsphase dar. Darauf folgt der nächste Generator, der in der Reihenfolge nach erstem Generator kommt, wobei dann der dritte, der vierte usw. der Reihenfolge das Senderecht nacheinander erhalten. Den Generatoren können somit verschiedene in der Reihenfolge vorgesehene Quelladressen zugeordnet sein, beispielsweise beginnend mit der Zahl null oder eins, wobei sich die Adressnummer um eins erhöht, wenn der nächste elektrische Generator das Senderecht erhält. In diesem Fall umfasst die Nachricht eine Kennung, die der jeweils aktuellen Quelladresse entspricht, der das aktuelle Senderecht zugeordnet ist, wobei bei jedem Sendevorgang diese Kennung um die Zahl eins erhöht wird, um den in der Reihenfolge darauf folgenden Generator anzusprechen. Auf den letzen Generator folgt wieder der erste Generator. Die Reihenfolge kann mittels einer Aufwärts- oder Abwärtsdurchnummerierung vorgesehen sein, bei der Übergabe des Tokens wird daher eine Kennung entweder erhöht oder dekrementiert.

In einer weiteren Ausführungsform umfasst das Netz einen Arbiter, der das Senderecht jeweils einem Generator zuteilt, indem der Generator über eine entsprechende Nachricht von der Zentralsteuerung angesprochen wird. Vorzugsweise wird vorgesehen, dass bei Ausfall dieser Kommunikations-Zentralsteuerung das System in einen nicht arbitrierten Modus übergeht, beispielsweise CDMA/CD oder Tokenring, um zu gewährleisten, dass auch ohne Kommunikatons-Zentralsteuerung, die von dem Arbiter vorgesehen wird, die einzelnen Generatoren ihre Auslastungswerte an die anderen Generatoren übertragen können.

Gemäß einer weiteren Ausführungsform ist an dem Netz, welches die elektrischen Generatoren verbindet, eine Abgabeleistungs-Zentralsteuerung vorgesehen, die eine Soll-Gesamtabgabeleistung vorsieht. Die Soll-Abgabeleistung ist von allen Generatoren der Gruppe in der Summe zu erzielen. Eine derartige Zentralsteuerung, die eine Soll-Gesamtabgabeleistung vorsieht, wird beispielsweise von einem Energiemanagement-modul oder einem ähnlichen übergeordneten Modul vorgesehen, welches eine vom Bordnetz verbrauchte Gesamtleistung ermittelt, um daraus die Soll-Gesamtabgabeleistung zu errechnen. Die Zentralsteuerung, welche eine Soll-Gesamtabgabeleistung vorsieht, kann beispielsweise die Spannung des Bordnetzes überwachen, um die Soll-Gesamtabgabeleistung zu erhöhen, wenn die Bordnetzspannung unter einen bestimmten Wert fällt, und um die Soll-Gesamtabgabeleistung zu verringern, wenn die Bordnetzspannung über einen weiteren Wert steigt. Die Zentralsteuerung kann insbesondere die Bordnetzspannung überwachen, um die Soll-Gesamtabgabeleistung derart zu regeln, dass die Bordnetzspannung konstant auf einem vorgegebenen Wert oder innerhalb eines Soll-Spannungsintervalls bleibt. Die Generatoren können eine Additionseinheit umfassen, um die einzelnen Generator-Auslastungswerte der anderen Generatoren zu addieren, um daraus eine insgesamt erbrachte Leistung zu errechnen, und um diese Leistung mit der Soll-Gesamtabgabeleistung zu vergleichen. Gemäß dem Vergleich wird dann vom Generator selbst die eigene Auslastung gesteuert. Bevorzugt werden jedoch von jedem einzelnen Generator die Generator-Auslastungswerte aller anderen Generatoren erfasst, addiert und gemittelt, um so die eigene Auslastung des einzelnen Generators gemäß dem gemittelten Wert zu steuern. Dadurch wird auch ohne eine Zentralsteuerung, die eine Gesamtabgabeleistung vorsieht, eine gleichmäßige Aufteilung der Auslastungen aller Generatoren erreicht.

Neben dem Mittelwert der Auslastungswerte aller anderen Generatoren kann auch ein weiterer Betriebswert zur Steuerung der einzelnen Generatoren vorgesehen werden, beispielsweise die Bordnetzspannung, wobei sich bei fallender Bordnetzspannung die eigene Auslastung des jeweiligen Generators über den Mittelwert der Auslastungswerte der anderen Generatoren hinaus erhöht. Die Erhöhung über den Mittelwert hinaus kann dergestalt sein, dass durch die Erhöhung die Bordnetzspannung wieder auf einen Normwert erhöht wird, oder kann dergestalt sein, dass die Bordnetzspannung nicht vollständig bis zu einem Nennwert erhöht wird. Da jedoch der einzelne Generator, der seine Auslastung über den Mittelwert hinaus erhöht, auch somit den gesamten Mittelwert für die anderen Generatoren erhöht, führt die nicht vollständig kompensierende Erhöhung eines Generators zur Steigerung der Ausgangsleistung der anderen Generatoren, wodurch die Leistungsbilanz des Bordnetzes zusätzlich ausgeglichen wird. Erfindungsgemäß orientiert sich zumindest einer der Gruppe von elektrischen Generatoren an der Kfz-Spannung und umfasst oder empfängt eine Mindest-Bordnetzspannung oder eine Norm-Bordnetzspannung, die von dem mindestens einen Generator mit der aktuellen Bordnetzspannung verglichen wird, um den eigenen Auslastungswert über das Mittel aller Auslastungswerte hinaus zu erhöhen. Die Erhöhung kann einen festen Wert umfassen oder kann an Hand der Differenz zwischen einer aktuell vorliegenden Bordnetzspannung und einer vorgegebenen Bordnetzspannung (beispielsweise der Mindest-Bordnetzspannung oder der Norm-Bordnetzspannung) ermittelt werden.

Erfindungsgemäß ermittelt jeder einzelne Generator basierend auf den Generator-Auslastungswerten der anderen Generatoren bzw. basierend auf dem Mittelwert der Generator-Auslastungswerte der anderen Generatoren eine für diesen einzelnen Generator geltende Soll-Einzelabgabeleistung bzw. einen für diesen Generator geltenden Generator-Auslastungswert, demgemäß der Generator arbeitet. Die einzustellende Soll-Abgabeleistung bzw. der einzustellende Auslastungswert des Generators wird dadurch vom Generator eingestellt, dass mindestens ein Betriebsparameter des einzelnen Generators verändert wird, beispielsweise eine Erregerspannung des Generators oder ein Tastverhältnis, mit der Erregerstrom geschaltet wird. Weiterhin kann als Betriebsparameter die Sollspannung eines Spannungsreglers des Generators eingestellt werden, oder es kann der Stromübertrag zwischen Statorwicklung und Erregerwicklung des Generators eingestellt werden, um dadurch den Selbsterregungsmodus des Generators einzustellen.

Die Generator-Auslastungswerte aller Generatoren der Gruppe werden kombiniert, um einen Gesamt-Auslastungswert zu erfassen. Die Kombination wird vorzugsweise vorgesehen durch Bilden eines arithmetischen Mittels, eines geometrischen Mittels, eines gewichteten Mittels oder einer Linearkombination der Auslastungswerte. Vorzugsweise wird das arithmetische Mittel der Auslastungswerte gebildet. Die Auslastungswerte können prinzipiell als anteiliger Wert bezogen auf einen Norm- oder Maximal-Auslastungswert bzw. Maximalleistungswert vorgesehen sein oder als Absolut-Auslastungswert, der die momentane Ist-Abgabeleistung oder die Soll-Abgabeleistung des einzelnen Generators wiedergibt. Beispielsweise können die Generator-Auslastungswerte als relative Werte vorgesehen sein und können Werte als ganze Zahlen in Form von Prozentwerten angeben, oder können gemäß der Darstellungsform innerhalb der übertragenen Nachricht einen von der Darstellungsform vorgegebenen Bereich abdecken, beispielsweise Werte von 0-255, wenn die Auslastungswerte (ohne Redundanzdaten) 8 Bit belegen. Neben dem Generator-Auslastungswert kann ein Generator oder kann jeder Generator der Gruppe von Generatoren einen Absolutleistungs-Normwert übertragen, der die durch die Auslegung vorbestimmte Nennleistung oder Maximalleistung wiedergibt. An Hand dieser Nennleistung kann mittels des zugehörigen relativen Generator-Auslastungswerts ein Absolutwert berechnet werden. Ferner kann bei der Bildung des Mittels die absolute Nennleistung des jeweiligen Generators dadurch berücksichtigt werden, dass das Mittel als gewichtetes Mittel wiedergegeben wird, wobei die einzelnen Auslastungswerte gemäß den zugehörigen Nennleistungswerten gewichtet werden, woraufhin die gewichteten Auslastungswerte gemittelt werden. Ferner kann anstatt eines Nennleistungswerts, der die Absolutleistung eines Generators als Maximalleistung oder Nennleistung wiedergibt, auch eine auf die Gesamtleistung bezogene Nennleistung übermittelt werden, wobei die relative Nennleistung einen Wert darstellt, der die absolute Nennleistung zu der Summe aller absoluten Nennleistungen aller Generatoren der Gruppe in Bezug setzt. Diese relativen Nennleistungen (die sich auf die Gesamtnennleistung aller Generatoren beziehen) können zur Gewichtung herangezogen werden, wenn ein gewichtetes Mittel aller (relativen) Auslastungswerte gebildet wird.

Wie bereits bemerkt, kann der Generator-Auslastungswert als Pulsweitenmodulationssignal oder als digitales Signal, vorzugsweise in binärer Form, übertragen werden. Der Auslastungswert kann in Bitform mit einer festen Wortbreite parallel oder seriell über das Netz übertragen werden oder kann als analoges Signal über das Netz übertragen werden. Die Übertragung wird entweder durch eine zentrale Arbiter-Einrichtung gesteuert oder wird dezentral dadurch gesteuert, dass ein Multiplexverfahren verwendet wird, welches ein dezentrales Zugriffsprotokoll aufweist. Als dezentrales Zugriffsprotokoll wird beispielsweise ein Protokoll mit zufälligem oder mit geordnetem Zugriff vorgesehen, beispielsweise CDMA/CD (Carrier Sense Multiple Access with Collision Detection), das vorsieht, dass ein Generator nur dann beginnt zu senden, wenn das Übertragungsmedium, d. h. das Netz, nicht von anderen Generatoren zur Übertragung verwendet wird. Hierbei werden Kollisionen gelöst, die entstehen, wenn zwei Generatoren nahezu gleichzeitig anfangen zu senden. Die Kollision wird beispielsweise dadurch aufgelöst, dass ein Generator, dessen Nachrichten nicht vollständig abgesendet werden konnten, die Übertragung wiederholt, vorzugsweise nach einer Zeitdauer, die fest ist, eine variable Konstante umfasst oder die eine zufällige Komponente umfasst oder vollständig zufällig ist. Als Multiplexverfahren kommen Zeitmultiplex-, Frequenzmultiplex- oder prinzipiell auch Codemultiplexverfahren in Betracht, wobei vorzugsweise ein Zeitmultiplexverfahren verwendet wird, bei dem die Verwendung des Netzes in (nicht überlappende) Zeitschlitze aufgeteilt wird und jeder Zeitschlitz maximal einem Generator zugeteilt ist. Während eines bestimmten Zeitschlitzes darf dann nur ein Generator senden, wobei die anderen Generatoren nicht senden können. Grundsätzlich kann auch ein Frequenzmultiplexverfahren verwendet werden, bei dem sich die Frequenzbänder vorzugsweise nicht überlappen oder sich trennbar überlappen. Wie auch beim Zeitmultiplexverfahren wird durch das Frequenzmultiplexverfahren ein Kanal, über den ein Generator sendet, von einem weiteren (logischen) Kanal getrennt. Die Zuteilung der Frequenzbänder oder Zeitschlitze kann durch eine zentrale Kommunikationssteuerung vorgesehen sein oder kann in den einzelnen Generatoren bzw. deren Steuerungen vorgesehen sein, so dass die Kommunikationssteuerung bzw. die Einteilung des Mediums dezentral vorgesehen ist.

Die Generatorauslastungswerte werden vorzugsweise mit einer Generatorkennung übertragen, beispielsweise zusammen mit einem Betriebszustandswert des zugehörigen Generators (beispielsweise in Funktion oder defekt), zusammen mit der aktuell abgegebenen Leistung, einer Regelvorgabe, die eine Soll-Leistung darstellt, einer Kommunikationssemaphore, wie sie beispielsweise für Tokenring-Kommunikation notwendig ist, oder zusammen mit einem Kommunikationsbefehl, der die Kommunikation steuert. Die Aufteilung des Mediums kann somit mit der Kommunikationssemaphore oder mit dem Kommunikationsbefehl vorgesehen werden, wobei die Regelvorgabe auch eine Regelstrategie sein kann, die beispielsweise einen Anteil kennzeichnet, mit dem der zugehörige Generator eine Leistungsversorgungslücke kompensieren soll, oder die Geschwindigkeit, mit der ein Generator auf Änderungen der Regelvorgaben reagieren soll. Der Betriebszustandswert kann neben einer Funktionsmeldung (ready oder defekt) auch eine Temperatur des zugehörigen Generators darstellen, um beispielsweise eine Erhitzung eines einzigen Generators zu vermeiden, während andere Generatoren bei niedrigeren Temperaturen arbeiten. Ferner kann der Betriebszustandswert auch den Betriebszustand weiterer Komponenten des Generators umfassen, beispielsweise den Arbeitszustand (defekt oder arbeitend) einer Gleichrichterschaltung oder einer Regelschaltung des Generators, oder auch die Temperatur der Regel- oder Gleichrichterschaltung. Der Betriebszustandswert kann ferner einen effektiven Erregerstrom des Einzelgenerators oder ein Tastverhältnis des Erregerstroms des Generators wiedergeben. Insbesondere kann der Betriebszustandswert einen Defektzustand wiedergeben, der anzeigt, dass der betreffende Generator keine Leistung abgibt. Ferner können globalere Werte mit den Daten übertragen werden, beispielsweise eine Soll-Gesamtabgabeleistung, die die erwünschte Leistungssumme wiedergibt, die beispielsweise von einer Energiemanagementschaltung abgegeben wird, oder eine Ist-Gesamtabgabeleistung, die beispielsweise von einem Stromsensor/Spannungssensor innerhalb des Bordnetzes erfasst wird.

Die Generator-Auslastungswerte können gegebenenfalls mit den oben genannten Daten unmittelbar zwischen den Generatoren übertragen werden oder können zunächst an einen Zentralspeicher innerhalb des Netzes abgegeben werden, der die Werte, insbesondere die Generator-Auslastungswerte, zusammen mit Generatoridentifikationen speichert und abrufbereit für alle Generatoren (zumindest für die anderen Generatoren) abrufbar bereithält. Vorzugsweise werden alle einem Generator zugehörigen Daten innerhalb eines Datenpakets in digitaler Form übertragen, vorzugsweise durch Hinzufügung von Redundanz geschützt, oder auch in redundanzfreier Form.

Neben einem erfindungsgemäßen Verfahren wird die Erfindung umgesetzt von einer dezentralen Steuerungseinrichtung, die mit einem elektrischen Generator verbindbar ist und an diesem angeordnet werden kann, um diesen einzelnen elektrischen Generator anzusteuern. Die dezentrale Steuerungseinrichtung umfasst eine Eingabe-/Ausgabeschnittstelle zur Kommunikation mit einer anderen Eingabe-/Ausgabeschnittstelle, die einer weiteren dezentralen Steuerungseinrichtung angehört, die an einen anderen Generator der Gruppe von Generatoren angeschlossen werden kann. Die Eingabe-/Ausgabeschnittstelle ist vorzugsweise von einer Empfangseinrichtung und einer Sendeeinrichtung der dezentralen Steuerungseinrichtung angesteuert und eingerichtet, gemäß dem oben genannten Verfahren zu kommunizieren. Daher sieht die Sendeeinrichtung vor, Generatorauslastungswerte des zugehörigen Generators in das Netz und somit an andere Generatoren direkt oder indirekt zu übermitteln, wobei neben dem Generator-Auslastungswert auch andere zugehörige Daten, vorzugsweise die Generatorkennung, übertragen werden. Die Empfangseinrichtung ist zum Empfang derartiger Daten und insbesondere der Generator-Auslastungswerte anderer Generatoren eingerichtet.

Die Erfindung wird somit umgesetzt von einem elektrischen Generator, der eine dezentrale Steuerungseinrichtung umfasst, welcher die oben genannte Eingabe-/Ausgabeschnittstelle umfasst sowie die zugehörige Empfangseinrichtung und die Sendeeinrichtung. Der elektrische Generator ist mit der dezentralen Steuerungseinrichtung derart verbunden, dass diese die Abgabeleistung des elektrischen Generators ansteuert. Folglich ist die dezentrale Steuerungseinrichtung derart eingerichtet, dass sie mit einem elektrischen Generator verbunden werden kann, um dessen Ausgabeleistung zu steuern. Zur Verarbeitung von Daten, die von anderen dezentralen Steuerungseinrichtungen kommen, umfasst die zentrale Steuerungseinrichtung vorzugsweise auch eine Mittelungsvorrichtung, mit der die gesendeten Generator-Auslastungswerte kombiniert werden können, wie oben beschrieben ist, d. h. mittels arithmetischer Mittelung oder mittels gemittelter Mittelung.

Gemäß einer weiteren Ausführungsform wird die Erfindung realisiert mittels einer Gesamtleistungs-Vorgabeeinrichtung, die mit dem Netz verbunden werden kann, um eine zu erbringende Gesamtleistung aller Generatoren in das Netz einzuspeisen, beispielsweise zum Empfang durch die einzelnen Generatoren der Gruppe oder zum Hinterlegen in einem Zentralspeicher, aus dem die einzelnen Generatoren den Wert der Gesamtleistung abrufen können. In einer weiteren Ausführungsform ist der Zentralspei-cher, aus dem der Wert der Gesamtleistung abgerufen werden kann, in der Gesamt-leistungs-Vorgabeeinrichtung vorgesehen. Die Gesamtleistungs-Vorgabeeinrichtung muss daher nur einfache Aufgaben erfüllen wie die Speicherung eines Werts oder die Übertragung eines Werts an einen Speicher, so dass auf Grund der geringen Komplexität die Auslastungswahrscheinlichkeit beispielsweise gegenüber einer Zentralsteuerung der Generatoren gemäß dem Stand der Technik deutlich verringert ist. Die Steuerung selbst wird nach wie vor von den einzelnen Generatoren vorgesehen, die sich an dem Wert der Gesamtleistung orientieren, der von der Gesamtleistungs-Vorgabeeinrichtung vorgegeben wird. Somit ist die erfindungsgemäße dezentrale Steuerung gewährleistet, wobei die Gesamtleistungs-Vorgabeeinrichtung die einzige gemeinsame Komponente vorgibt, d. h. den Wert der gewünschten Gesamtleistung. Somit können die einzelnen Generatoren bzw. die zugehörigen dezentralen Steuerungseinrichtungen einfacher aufgebaut werden, da diese die einzelnen Auslastungswerte der Generatoren der Gruppe nicht kombinieren müssen. In dieser Ausführung wird vorzugsweise von jedem Generator an die Gesamtleistungs-Vorgabeeinrichtung der Generator-Auslastungswert übertragen, so dass die Gesamtleistungs-Vorgabeeinrichtung in der Lage ist, alle einzelnen Auslastungswerte der Generatoren zu kombinieren, beispielsweise durch Mittelung.

Das erfindungsgemäße Verfahren und die erfindungsgemäßen Vorrichtungen erlauben eine individuelle Steuerung, die in jedem einzelnen Generator der Gruppe von Generatoren vorgesehen ist. Dadurch wird die Steuerung dezentral vorgesehen; keiner Komponente kommt eine derart zentrale Stellung zu, dass durch deren Ausfall der Betrieb der anderen Generatoren beeinträchtigt wäre. Vorzugsweise wird mit den einzelnen Auslastungswerten der Generatoren auch ein Fehlerstatus der Generatoren übermittelt, so dass bei der Ermittlung eines Fehlers eines Generators die anderen Generatoren davon ausgehen, dass dieser keine Leistung erbringt, so dass die Gesamtleistung sich aus der Summe aller funktionierenden Generatoren ergibt. Ein defekter Generator wird somit von der Mittelung ausgenommen.

Als Generatoren, die ein Kfz-Bordnetz speisen, kommen mindestens zwei der folgenden Generatoren in Betracht: Lichtmaschine, Startergenerator, Rekuperationsgenerator und andere.

### Kurze Beschreibung der Zeichnungen

Ausführungsbeispiele der Erfindung sind in der Zeichnung dargestellt und in der nachfolgenden Beschreibung näher erläutert.

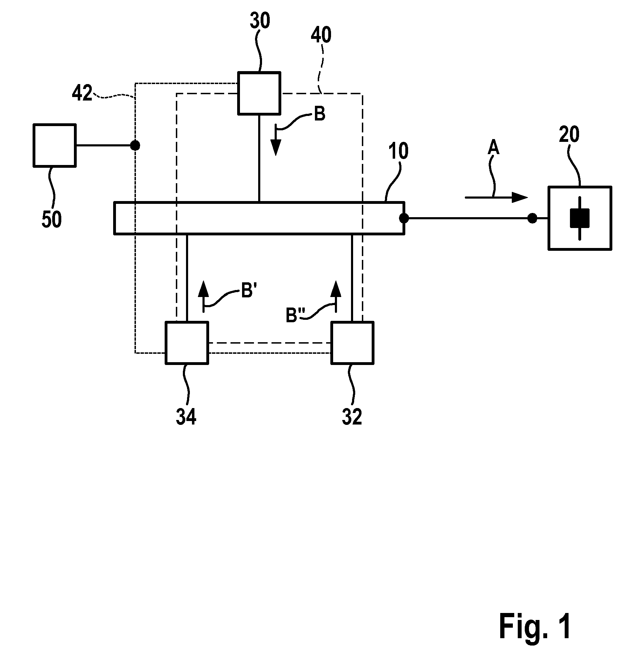

Es zeigt
- Figur 1: eine Systemübersicht zur Erläuterung des erfindungsgemäßen Verfahrens.

### Ausführungsformen der Erfindung

In der Figur 1 ist eine Systemübersicht dargestellt, die zur Erläuterung des erfindungsgemäßen Verfahrens dient. Über ein Bordnetz 10 wird eine daran angeschlossene Last 20 mit elektrischer Leistung versorgt, vgl. Leistungsflussrichtung A, wobei das Bordnetz von drei Generatoren 30, 32 und 34 gespeist wird. Der Leistungsfluss der Generatoren ist mit den Pfeilen B, B' und B" dargestellt. Mit gestrichelten Linien ist ein erstes Netz dargestellt, mit dem die Generatoren 30-34 in Verbindung miteinander vorgesehen sind. Die gestrichelte Kommunikationsverbindung zeigt einen Tokenring, bei dem zunächst der Generator 30, der beispielsweise die Identifikationsnummer 1 trägt, ein Token zusammen mit Daten über die Auslastung des Generators 30 an den Generator 32 schickt. Vor Absenden des Datenpakets wird die Kennung innerhalb des Datenpakets um 1 erhöht, so dass nun das Datenpaket die Generatorkennung 2 enthält. Die Daten werden über das gestrichelt dargestellte Netz an alle Generatoren 30-34 versandt, wobei lediglich der Generator 32, welcher die Kennung 2 aufweist, durch das Datenpaket autorisiert ist zu senden. Die Autorisierung ergibt sich daher, dass das Datenpaket die gleiche Kennung wie die Kennung des Generators 32 besitzt. Dieser sendet seine eigene Auslastung als Auslastungswert über das gestrichelt dargestellte Netz 40 an den Generator 34, nachdem der Generator 32 die Kennung vom Paket übernimmt, das vom Generator 30 abgesandt wurde, und die Kennung um 1 (oder allgemein um einen festen Wert) inkrementiert. Da wiederum das vom Generator 32 abgesandte Paket den Auslastungswert (des Generators 32) sowie die um 1 erhöhte Kennung enthält, empfangen alle Generatoren, insbesondere die anderen Generatoren 30 und 34 nicht nur den Auslastungswert des Generators 32, sondern auch die Kennung des Generators, der als nächstes sendeberechtigt ist. Auf Grund der Erhöhung der Kennung durch den Generator 32 ist nun der Generator 34 angesprochen, dessen Kennung 3 ist und somit die Sendeberechtigung erhält. Der Generator 34 übersendet seinen Auslastungswert innerhalb eines Datenpakets in das Netz, so dass die Generatoren 30 und 32 dieses Paket empfangen. Die Kennung wird von Generator 34 wieder zurückgesetzt, da dieser die höchste Kennung aller Generatoren aufweist, so dass nun (unter anderem) der Generator 30 ein Datenpaket erhält, das dessen Kennung aufweist. Somit ist der Generator 30 wieder sendeberechtigt, sendet seinen Auslastungswert zusammen mit der um 1 erhöhten Kennung an alle Generatoren, wobei durch die von Generator 30 erhöhte Kennung die Sendeberichtigung nun bei Generator 32 liegt. Bei jedem Übergang von einem Generator zum nächsten Generator wird der Auslastungswert an alle anderen Generatoren versendet. Gleichzeitig wird das Senderecht an den nächsten Generator weitergegeben, indem die Kennung vor dem Versenden des Datenpakets erhöht wird.

Es ist offensichtlich, dass die Kennung auch abwärts laufend vorgesehen werden kann, wobei anstatt einer Erhöhung des Werts dieser um 1 verringert wird, und der Generator mit der kleinsten Kennung die Kennung innerhalb des Datenpakets, mit dem der Auslastungswert verschickt wird, auf die Kennung des in der Reihenfolge ersten Generators setzt, d. h. auf die höchste Kennung aller Generatoren innerhalb der Gruppe.

Eine weiter denkbare (alternative) Netzarchitektur ist mit gepunkteten Linken dargestellt, d. h. in Form eines linearen Busses, der die Generatoren 30, 34 und 32 miteinander verbindet. Alle Generatoren senden und empfangen auf dem gleichen Bus 42. Der Bus 42 ist eine Alternative zu der mit 40 gekennnzeichneten Netzstruktur. Die Generatoren 30, 32 und 34 hören das Netz ab und warten auf eine Sendepause aller anderen Generatoren. Wenn das Netz, d. h. der Bus 32 frei ist, sendet einer der Generatoren seinen Auslastungswert, der von allen anderen Generatoren empfangen wird. Sendet somit Generator 30, empfangen die Generatoren 32 und 34 den Auslastungswert. Die Auslastungswerte werden vorzugsweise regelmäßig von dem Generator abgesandt, wobei zu verhindern ist, dass Auslastungswerte verloren gehen, wenn Generatoren überlappend in den Bus 42 übermitteln. Senden daher beispielsweise der Generator 30 und der Generator 34 gleichzeitig oder überlappend ihren Auslastungswert in den Bus hinein, so wird vorzugsweise von beiden Generatoren die korrekte Absendung des Auslastungswerts (beispielsweise als Datenpaket) überwacht, und die Übertragung wird von allen Generatoren wiederholt, die eine Störung bei der Absendung des eigenen Auslastungswertes feststellen. Vorzugsweise wiederholen die Generatoren bei einer detektierten Detektion die Übertragung nach verschiedenen Zeitdauern, um eine sich ständig wiederholenden Kollision zu vermeiden. Die Dauer kann somit verschieden vorgesehen sein, beispielsweise kann diese von einer individuellen Kennung der Generatoren abhängen (Kennung 1 → 1 Sekunde Wartezeit, Kennung 15 → 15 Sekunden Wartezeit oder als weiteres Beispiel: Wartezeit = c1 · Kennung + c2). Das mit 42 dargestellte Netz wird somit dezentral gesteuert und erfordert keine zentrale Kommunikationseinrichtung.

Eine Ausführung der Erfindung, die eine zentrale Kommunikationseinrichtung umfasst, ist mit dem Bezugszeichen 50 dargestellt. Diese arbeitet mit einem Netz zusammen, das wie mit dem Bezugszeichen 42 dargestellt verläuft. Die Kommunikationseinrichtung 50 steuert die Kommunikation der Generatoren 30-34 untereinander, indem diese über den Bus 42 eine Kennung überträgt, beispielsweise in Form eines Kommunikationsbefehls, mit dem die einzelnen Generatoren individuell angesprochen werden, und ihren Auslastungswert in den Bus 42 abgeben, so dass dieser von den Generatoren 32 und 34 empfangen wird. Die Kommunikationseinrichtung 50 steuert somit die einzelnen Generatoren an, um diese dazu zu veranlassen, ihre eigenen Auslastungswerte an die anderen Generatoren zu übertragen. Gleichzeitig gewährleistet die Kommunikationseinrichtung 50, dass die Generatoren ihre Daten geordnet in den Bus abgeben, wodurch eine Kollision vermieden wird. Alternativ kann die Kommunikationseinrichtung 50 auch mit einem Speicher vorgesehen sein, der die Auslastungswerte der einzelnen Generatoren empfängt und diese zwischenspeichert, wobei die Kommunikationseinrichtung 50 das Abrufen der einzelnen Auslastungswerte aus dem Speicher durch Abgabe von individuellen Befehlen an die Generatoren steuert. Ferner kann die Kommunikationsvorrichtung 50 mit einer Mittelungseinrichtung vorgesehen sein, die die empfangenen einzelnen Auslastungswerte addiert und mittelt (gegebenenfalls gewichtet), wobei die Kommunikationseinrichtung 50 eingerichtet ist, den gemittelten Gesamtwert in das Netz 42 und somit an alle Generatoren 30-34 zu übermitteln. Die zentrale Kommunikationseinrichtung 50 kann somit nicht nur die Funktionen einer zentralen Kommunikationssteuerung aufweisen, sondern auch die Funktionen einer Gesamtleistungs-Vorgabeeinrichtung, die die einzelnen Auslastungswerte sammelt und auf Grund der empfangenen Werte eine zu erzeugende Gesamtleistung vorsieht und diese an die Generatoren 30-34 überträgt. Die Generatoren 30-34 bilden die Gruppe von mindestens zwei elektrischen Generatoren, die untereinander in Beziehung stehen, um gemeinsam eine ausgeglichene Leistungserzeugung vorzusehen. Die insgesamt zu erzeugende Soll-Leistung kann beispielsweise von einem Energiemanagementsystem vorgesehen werden (nicht dargestellt), welches die durch die Last 20 dargestellte Leistungssenke erfasst.

## Patentansprüche

1. Verfahren zur Steuerung einer Gruppe von mindestens zwei elektrischen Generatoren (30 - 34), die ein Kfz-Bordnetz (10) versorgen, wobei jeder einzelne Generator (30 - 34) der Gruppe einen Generator-Auslastungswert, der die Auslastung des einzelnen Generators (30) wiedergibt, jedem anderen (32, 34) der Gruppe von Generatoren bereitstellt, wobei die Auslastungswerte einen Absolutwert darstellen, der eine Ist-Leistung wiedergibt, die von dem einzelnen Generator erbracht wird, oder einen relativen Wert darstellen, der ein Verhältnis der Ist-Leistung zu einer Nominalleistung des einzelnen Generators (30) wiedergibt.

2. Verfahren nach Anspruch 1, wobei jeder einzelne Generator (30 - 34) der Gruppe basierend auf den Generator-Auslastungswerten der anderen Generatoren (32 - 34) der Gruppe eine auf diesen einzelnen Generator (30) bezogene Soll-Einzelabgabeleistung ermittelt, gemäß der mindestens ein Betriebsparameter des einzelnen Generators (30) vom einzelnen Generator eingestellt wird.

3. Verfahren nach Anspruch 1, wobei eine Zentralsteuerung (50) eine Soll-Gesamtabgabeleistung vorsieht, die von allen Generatoren (30 - 34) der Gruppe zusammen zu erzielen ist, und jeder einzeine Generator (30) der Gruppe basierend auf den Generator-Auslastungswerten der anderen Generatoren (32 - 34) der Gruppe und basierend auf die Soll-Gesamtabgabeleistung eine auf diesen einzelnen Generator (30) bezogene Soll-Einzelabgabeleistung ermittelt, gemäß der mindestens ein Betriebsparameter des einzelnen Generators (30) vom einzelnen Generator eingestellt wird.

4. Verfahren nach Anspruch 1, wobei jeder einzelne Generator (30 - 34) der Gruppe die Generator-Auslastungswerte der anderen Generatoren der Gruppe kombiniert durch Bilden eines arithmetischen Mittels der Auslastungswerte, eines geometrischen Mittels der Auslastungswerte, eines gewichteten Mittels der Auslastungswerte, eines Mittels der als Linearkombination der Auslastungswerte und aus diesem Mittel eine auf den einzelnen Generator (30) bezogene Soll-Einzelabgabeleistung ermittelt, gemäß der mindestens ein Betriebsparameter des einzelnen Generators vom einzelnen Generator eingestellt wird.

5. Verfahren nach Anspruch 1, wobei jeder einzelne Generator (30) der Gruppe mit jedem anderen Generator (32 - 34) der Gruppe über ein gemeinsames Netz (40; 42) der Generatoren der Gruppe den Generator-Auslastungswert als Pulsweitenmodulationssignal, als Burst-Pulsweitenmodulationssignal, als digitales Signal, als parallel-binären Wert, als seriell-binären Wert oder als analoges Signal in das Netz (40; 42) sendet, das Netz einen seriellen oder parallelen Bus umfasst, die Übertragung der Generator-Auslastungswerte innerhalb des Netzes durch eine zentrale Arbiter-Einrichtung (50) gesteuert wird, oder die Übertragung der Generator-Auslastungswerte innerhalb des Netzes wird über ein Multiplexverfahren und ein dezentrales Zugriffsprotokoll mit zufälligem Zugriff oder mit geordneten Zugriff vorgesehen, und die Generator-Auslastungswerte einzeln in dem Netz (40; 42) übertragen werden, ohne sich zeitlich zu überlappen, oder die Generator-Auslastungswerte in unterschiedlichen Frequenzbändern in dem Netz (40; 42) übertragen werden, die sich nicht überlappen.

6. Verfahren nach Anspruch 1, wobei die Generator-Auslastungswerte über ein gemeinsames Netz (40; 42), an das alle Generatoren (30 - 34) der Gruppe angeschlossen sind, übertragen werden, zusammen mit einer Generatorkennung, einem Betriebszustandswert des einzelnen Generators (30), einer Regelvorgabe, einer Kommunikations-Semaphore oder einem Kommunikationsbefehl oder einer Kombination hiervon, wobei die Regelvorgabe eine Regelstrategie, eine Ist-Leistung des einzelnen Generators, eine Soll-Leistung des einzelnen Generators kennzeichnet; und der Betriebszustandswert des einzelnen Generators eine Temperatur des einzelnen Generators oder einer Regel- oder Gleichrichterschaltung des einzelnen Generators, einen effektiven Erregerstrom des einzelnen Generators, ein Tastverhältnis des Erregerstroms oder DefektZustand des einzelnen Generators, eine Soll-Gesamtabgabeleistung oder eine Ist-Gesamtabgabeleistung aller Generatoren der Gruppe, oder eine Kombination hiervon kennzeichnet.

7. Verfahren nach Anspruch 1, wobei die Generator-Auslastungswerte bereitgestellt werden durch Übertragen der Generator-Auslastungswerte an einen Zentralspeicher, der von allen Generatoren (30 - 34) der Gruppe abrufbar ist, oder durch Übertragen der Generator-Auslastungswerte von jedem einzelnen Generator an jeden anderen Generator der Gruppe über einen Datenbus in Form redundanzfreier digitaler Daten oder in Form von redundanzgeschützten digitalen Daten.

8. Dezentrale Steuerungseinrichtung, die eingerichtet ist, einen zugehörigen, einzelnen elektrischen Generator eines Kfz-Bordnetzes anzusteuern und an diesem angeordnet zu sein, mit einer Eingabe/Ausgabeschnittstelle, die zur Kommunikation mit einer anderen Eingabe/Ausgabeschnittstelle einer weiteren dezentralen Steuerungseinrichtung eingerichtet ist, einer Empfangseinrichtung und einer Sendeeinrichtung, wobei die Sendeeinrichtung eingerichtet ist, einen Generator-Auslastungswert, der die Auslastung des zugehörigen Generators wiedergibt, zu senden, und die Empfangseinrichtung eingerichtet ist, einen Generator-Auslastungswert der anderen Eingabe/Ausgabeschnittstelle der weiteren dezentralen Steuerungseinrichtung zu empfangen.

9. Elektrischer Generator (30 - 34) zur Versorgung eines Kfz-Bordnetzes mit einer dezentralen Steuerungseinrichtung nach Anspruch 8.

## Claims

1. Method for controlling a group of at least two electric generators (30-34) which supply a motor vehicle supply system (10), wherein each individual generator (30-34) of the group provides a generator utilization value, which reproduces the utilization of the individual generator (30), to each other one (32, 34) of the group of generators, the utilization values representing an absolute value which reproduces an actual power which is generated by the individual generator or represent a relative value which reproduces a ratio of the actual power to a nominal power of the individual generator (30).

2. Method according to Claim 1, wherein each individual generator (30-34) of the group determines, based on the generator utilization values of the other generators (32-34) of the group, a nominal individual delivery power according to which the at least one operating parameter of the individual generator (30) is set by the individual generator.

3. Method according to Claim 1, wherein a central controller (50) provides a nominal total delivery power which is to be achieved by all generators (30-34) of the group together, and each individual generator (30) of the group determines, based on the generator utilization values of the other generators (32-34) of the group and based on the nominal total delivery power, a nominal individual delivery power related to this individual generator (30), according to which the at least one operating parameter of the individual generator (30) is set by the individual generator.

4. Method according to Claim 1, wherein each individual generator (30-34) of the group combines the generator utilization values of the other generators of the group, by forming an arithmetic mean of the utilization values, a geometric mean of the utilization values, a weighted mean of the utilization values, a mean of the as linear combination of the utilization values and from this mean a nominal individual delivery power referred to the individual generator (30) according to which at least one operating parameter of the individual generator is set by the individual generator.

5. Method according to Claim 1, wherein each individual generator (30) of the group with each other generator (32-34) of the group sends the generator utilization value via a common network (40; 42) of the generators of the group as pulse width modulation signal, as burst pulse width modulation signal, as digital signal, as parallel-binary value, as serial-binary value or as analogue signal into the network (40; 42), the network comprises a serial or parallel bus, the transmission of the generator utilization values within the network is controlled by a central arbiter unit (50) or the transmission of the generator utilization values within the network is provided via a multiplex method and a decentralized access protocol with random access or with ordered access and the generator utilization values are transmitted individually into the network (40; 42) without overlapping in time, or the generator utilization values are transmitted in the network (40; 42) in different frequency bands which do not overlap.

6. Method according to Claim 1, wherein the generator utilization values are transmitted via a common network (40; 42) to which all generators (30-34) of the group are connected, together with a generator identifier, an operating status value of the individual generator (30), a control input, a communication semaphore or a communication command or a combination thereof, wherein the control input identifies a control strategy, an actual power of the individual generator, a nominal power of the individual generator; and the operating status value of the individual generator identifies a temperature of the individual generator or of a control or rectifier circuit of the individual generator, an effective exciter current of the individual generator, a duty ratio of the exciter current or defect status of the individual generator, a nominal total delivery power or an actual total delivery power of all generators of the group or a combination thereof.

7. Method according to Claim 1, wherein the generator utilization values are provided by transmitting the generator utilization values to a central memory which can be called up by all generators (30-34) of the group, or by transmitting the generator utilization values from each individual generator to each other generator of the group via a data bus in the form of redundancy-free digital data or in the form of redundancy-protected digital data.

8. Decentralized control unit which is configured to drive an associated individual electric generator of a motor vehicle supply system and to be arranged at the latter, with an input/output interface which is configured for communication with another input/output interface of a further decentralized control unit, a receiving unit and a transmitting unit, the transmitting unit being configured to send a generator utilization value which reproduces the utilization of the associated generator and the receiving unit is configured to receive a generator utilization value of the other input/output interface of the further decentralized control unit.

9. Electric generator (30-34) for supplying a motor vehicle supply system with a decentralized control unit according to Claim 8.

## Revendications

1. Procédé de commande d'un groupe d'au moins deux générateurs (30 - 34) électriques qui alimentent un réseau de bord de véhicule (10), chaque générateur (30 - 34) individuel du groupe mettant à disposition de chaque autre (32, 34) du groupe de générateurs une valeur de charge de générateur qui reproduit la charge du générateur (30) individuel, les valeurs de charge représentant une valeur absolue qui reproduit une puissance réelle qui est produite par le générateur individuel, ou représentant une valeur relative qui reproduit un rapport entre la puissance réelle et une puissance nominale du générateur individuel (30).

2. Procédé selon la revendication 1, selon lequel chaque générateur (30 - 34) individuel du groupe, en se basant sur les valeurs de charge de générateur des autres générateurs (32 - 34) du groupe, détermine une puissance délivrée individuelle de consigne rapportée à ce générateur (30) individuel, conformément à laquelle au moins un paramètre de fonctionnement du générateur (30) individuel est réglé par le générateur individuel.

3. Procédé selon la revendication 1, selon lequel une commande centrale (50) prévoit une puissance délivrée totale de consigne qui doit être atteinte par tous les générateurs (30 - 34) du groupe ensemble, et chaque générateur (30) individuel du groupe, en se basant sur les valeurs de charge de générateur des autres générateurs (32 - 34) du groupe et en se basant sur la puissance délivrée totale de consigne, détermine une puissance délivrée individuelle de consigne rapportée à ce générateur (30) individuel, conformément à laquelle au moins un paramètre de fonctionnement du générateur (30) individuel est réglé par le générateur individuel.

4. Procédé selon la revendication 1, selon lequel chaque générateur (30 - 34) individuel du groupe combine les valeurs de charge de générateur des autres générateurs du groupe en formant une moyenne arithmétique des valeurs de charge, une moyenne géométrique des valeurs de charge, une moyenne pondérée des valeurs de charge, une moyenne de la en tant que combinaison linéaire des valeurs de charge et détermine à partir de cette moyenne une puissance délivrée individuelle de consigne rapportée au générateur (30) individuel, conformément à laquelle au moins un paramètre de fonctionnement du générateur individuel est réglé par le générateur individuel.

5. Procédé selon la revendication 1, selon lequel chaque générateur (30) individuel du groupe émet avec chaque autre générateur (32 - 34) du groupe, par le biais d'un réseau commun (40 ; 42) des générateurs du groupe, la valeur de charge de générateur sous la forme d'un signal à modulation d'impulsions en largeur, en tant que signal à modulation d'impulsions en largeur en rafale, en tant que signal numérique, en tant que valeur binaire parallèle, en tant que valeur binaire série ou en tant que signal analogique dans le réseau (40 ; 42), le réseau comprenant un bus série ou parallèle, la transmission des valeurs de charge de générateur à l'intérieur du réseau étant commandée par un dispositif d'arbitrage central (50), ou la transmission des valeurs de charge de générateur à l'intérieur du réseau étant prévue par le biais d'un procédé de multiplexage et d'un protocole d'accès décentralisé avec accès aléatoire ou avec accès ordonné, et les valeurs de charge de générateur étant transmises individuellement dans le réseau (40 ; 42) sans se chevaucher dans le temps, ou les valeurs de charge de générateur étant transmises dans le réseau (40 ; 42) dans des bandes de fréquences différentes qui ne se chevauchent pas.

6. Procédé selon la revendication 1, selon lequel les valeurs de charge de générateur sont transmises par le biais d'un réseau commun (40 ; 42) auquel sont raccordés tous les générateurs (30 - 34) du groupe, conjointement avec un identifiant de générateur, une valeur d'état opérationnel du générateur (30) individuel, une consigne de régulation, un sémaphore de communication ou une instruction de communication ou une combinaison de ceux-ci, la consigne de régulation caractérisant une stratégie de régulation, une puissance réelle du générateur individuel, une puissance de consigne du générateur individuel ; et la valeur d'état opérationnel du générateur individuel caractérisant une température du générateur individuel ou un circuit de régulation ou de redressement du générateur individuel, un courant d'excitateur effectif du générateur individuel, un rapport cyclique du courant d'excitateur ou un état de défaut du générateur individuel, une puissance délivrée totale de consigne ou une puissance délivrée totale réelle de tous les générateurs du groupe, ou une combinaison de ceux-ci.

7. Procédé selon la revendication 1, selon lequel les valeurs de charge de générateur sont mises à disposition en transmettant les valeurs de charge de générateur à une mémoire centrale qui peut être consultée par tous les générateurs (30 - 34) du groupe, ou en transmettant les valeurs de charge de générateur de chaque générateur individuel à chaque autre générateur du groupe par le biais d'un bus de données sous la forme de données numériques sans redondance ou sous la forme de données numériques protégées par redondance.

8. Dispositif de commande décentralisé qui est conçu pour commander un générateur électrique individuel associé d'un réseau de bord de véhicule et être disposé sur celui-ci, comprenant une interface d'entrée/sortie qui est conçue pour la communication avec une autre interface d'entrée/sortie d'un dispositif de commande décentralisé supplémentaire, un dispositif de réception et un dispositif d'émission, le dispositif d'émission étant conçu pour émettre une valeur de charge de générateur qui reproduit la charge du générateur associé, et le dispositif de réception étant conçu pour recevoir une valeur de charge de générateur de l'autre interface d'entrée/sortie du dispositif de commande décentralisé supplémentaire.

9. Générateur électrique (30 - 34) destiné à alimenter un réseau de bord de véhicule comprenant un dispositif de commande décentralisé selon la revendication 8.
